# EUROPEAN PATENT APPLICATION

(11) **EP 3 820 127 A1**
(43) Date of publication of application: **12.05.2021**
(21) Application number: 19839928.9
(22) Date of filing: 07.05.2019
(51) Int. Cl.: H04M 1/03

(54) **MICROPHONE HOLE BLOCKAGE DETECTING METHOD AND RELATED PRODUCT**

(30) Priority: 26.07.2018 CN 201810841654
(71) Applicant: GUANGDONG OPPO MOBILE TELECOMMUNICATIONS CORP., LTD., Dongguan Guangdong 523860 (CN)
(72) Inventor: YAN, Congwei, Dongguan, Guangdong 523860 (CN)
(74) Representative: Manitz Finsterwald Patent- und Rechtsanwaltspartnerschaft mbB
(86) International application number: PCT/CN2019/085881
(87) International publication number: WO 2020/019822

(57) **Abstract**

A method for detecting blocking of a microphone and related products are provided. The method includes the following. Sound waves in a preset frequency band are acquired through a microphone of the first wireless earphone, the preset frequency band being a frequency band of audible sound. A first timbre parameter of the sound waves acquired through the first wireless earphone is determined. The microphone of the first wireless earphone is determined to be blocked according to the first timbre parameter. By means of implementations of the present disclosure, automatic blocking detection of a microphone of a wireless earphone can be realized, and convenience, flexibility and intelligence of blocking detection can be improved.

## Description

### TECHNICAL FIELD

This disclosure relates to the field of wireless earphone technology, and more particularly to a method for detecting blocking of a microphone and related products.

### BACKGROUND

With wide spread and rapid development of mobile terminals (e.g., smart phones), various earphones are often used to listen to media. Moreover, an earphone cable of a wired earphone is often damaged, which results to a short life and high cost of the earphone, and wireless earphones come into being.

Currently, it is found that a hole of a microphone of a wireless earphone is often blocked, by such as dust, water droplets, etc., which results to intermittence and low volume of voice data obtained through the microphone of the wireless earphone and affects normal use of the wireless earphone.

### SUMMARY

Implementations provide a method for detecting blocking of a microphone and related products, which can realize automatic blocking detection of a microphone of a wireless earphone and is beneficial to improve convenience, flexibility and intelligence of blocking detection.

In a first aspect, a method for detecting blocking of a microphone is provided. The method is applicable to a first wireless earphone that is in communication with a mobile terminal and a second wireless earphone. The method includes the following. Sound waves in a preset frequency band are acquired through a microphone of the first wireless earphone, where the preset frequency band is a frequency band of audible sound. A first timbre parameter of the sound waves acquired through the first wireless earphone is determined. The microphone (e.g., microphone-hole) of the first wireless earphone is determined to be blocked according to the first timbre parameter.

In a second aspect, an apparatus for detecting blocking of a microphone is provided. The apparatus for detecting blocking of a microphone is applicable to a first wireless earphone that is in communication with a mobile terminal and a second wireless earphone. The apparatus for detecting blocking of a microphone includes an acquiring unit, a first determining unit, and a second determining unit.

The acquiring unit is configured to acquire, through a microphone of the first wireless earphone, sound waves in a preset frequency band, where the preset frequency band is a frequency band of audible sound. The first determining unit is configured to determine a first timbre parameter of the sound waves acquired through the first wireless earphone. The second determining unit is configured to determine that the microphone of the first wireless earphone is blocked according to the first timbre parameter.

In a third aspect, a first wireless earphone is provided. The first wireless earphone includes a processor, a memory, and one or more programs stored in the memory and executed by the processor. The one or more programs include instructions for performing the method described in the first aspect.

In a fourth aspect, a computer-readable storage medium is provided. The computer-readable storage medium is configured to store computer programs for electronic data interchange (EDI). The computer programs include instructions for performing some or all operations of the method described in the first aspect.

In a fifth aspect, a computer program product is provided. The computer program product includes a non-transitory computer-readable storage medium that stores computer programs. The computer programs are operable with a computer to execute some or all operations of the method described in the first aspect. The computer program product may be a software installation package.

### BRIEF DESCRIPTION OF THE DRAWINGS

The following will give a brief description of accompanying drawings used for describing implementations.
FIG. 1 is a schematic structural diagram of a first wireless earphone system according to implementations.
FIG. 2 is a schematic flowchart of a method for detecting blocking of a microphone according to implementations.
FIG. 3 is a schematic flowchart of a method for detecting blocking of a microphone according to other implementations.
FIG. 4 is a schematic flowchart of a method for detecting blocking of a microphone according to other implementations.
FIG. 5 is a schematic structural diagram of a first wireless earphone according to implementations.
FIG. 6A is a block diagram illustrating functional units of an apparatus for detecting blocking of a microphone according to implementations.
FIG. 6B is a block diagram illustrating functional units of an apparatus for detecting blocking of a microphone according to other implementations.

### DETAILED DESCRIPTION

In order for those skilled in the art to better understand technical solutions of implementations, technical solutions of implementations will be described clearly and completely with reference to accompanying drawings in the implementations. Apparently, implementations hereinafter described are merely some implementations, rather than all implementations, of the disclosure. All other implementations obtained by those of ordinary skill in the art based on the implementations herein without creative efforts shall fall within the protection scope of the disclosure.

The terms "first", "second", "third", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units. Instead, it can optionally include other steps or units that are not listed; alternatively, other steps or units inherent to the process, method, product, or apparatus can also be included.

The term "implementation" referred to herein means that a particular feature, structure, or character described in conjunction with the implementation may be contained in at least one implementation of the disclosure. The phrase appearing in various places in the specification does not necessarily refer to the same implementation, nor does it refer to an independent or alternative implementation that is mutually exclusive with other implementations. It is explicitly and implicitly understood by those skilled in the art that an implementation described herein may be combined with other implementations.

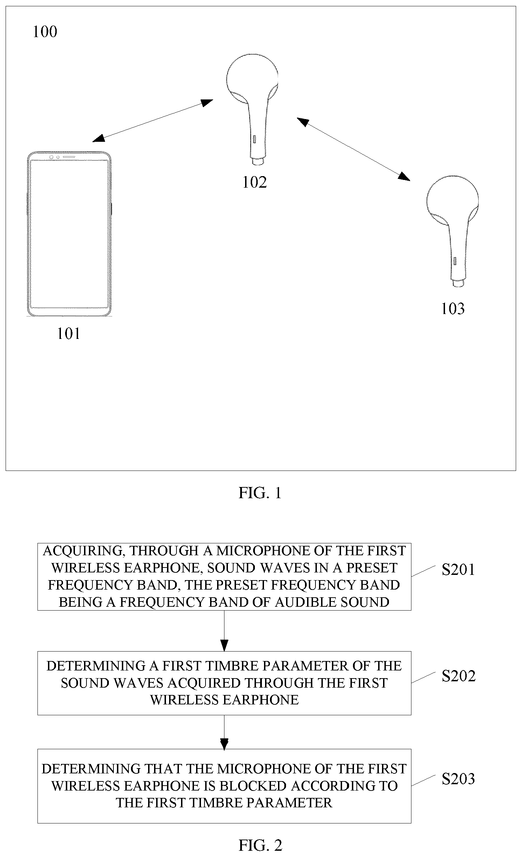

Implementations of the present disclosure provide a first wireless earphone system 100. As illustrated in FIG. 1, the system includes a mobile terminal 101, a first wireless earphone 102, and a second wireless earphone 103. A first communication link is established between the mobile terminal 101 and the first wireless earphone 102, and a second communication link is established between the first wireless earphone 102 and the second wireless earphone 103, that is, communications between the first wireless earphone 102 and the mobile terminal 101 and between the second wireless earphone 103 and the mobile terminal 101 adopt a master-slave communication mechanism (specifically, a Bluetooth protocol can be used). A master earphone can directly establish a communication link with the mobile terminal 101 and exchange data of a preset type with the mobile terminal 101. A slave earphone can exchange data of the preset type with the mobile terminal 101 through a transfer of the master earphone. Data of the preset type includes at least one of media data and call data, where the media data is at least one of audio data and video data of the mobile terminal 101 other than call voice data, and the call data is the call voice data of the mobile terminal 101. The first wireless earphone 102 and the second wireless earphone 103 may be Bluetooth wireless earphones and the like. The mobile terminal 101 may include various handheld devices, in-vehicle devices, wearable devices (such as smart watches, smart bracelets, pedometers, etc.), computing devices that have wireless communication functions or other processing devices connected to a wireless modem, as well as various forms of user equipments (UE), mobile stations (MS), terminal devices, and the like. For ease of description, the above-mentioned devices are collectively referred to as a mobile terminal. Hereinafter, detailed description of implementations of the present disclosure will be given below.

FIG. 2 is a schematic flowchart of a method for detecting blocking of a microphone according to implementations. As illustrated in FIG. 2, the method for detecting blocking of a microphone includes the following.

S201, a first wireless earphone acquires, through a microphone of the first wireless earphone, sound waves in a preset frequency band, where the preset frequency band is a frequency band of audible sound.

Sound waves include ultrasonic waves, audible sound waves, and infrasound waves, and the audible sound is in a frequency band from 20 Hz to 20000 Hz that can be heard by human's ear.

The sound waves in the preset frequency band acquired through the microphone may be sound waves of ambient sound, sound waves emitted by a speaker of at least one of the mobile terminal, the first wireless earphone, or the second wireless earphone, or user's voice sound waves acquired by the microphone when the user is using voice or video chat application, which are not limited here.

S202, the first wireless earphone determines a first timbre parameter of the sound waves acquired through the first wireless earphone.

Timbre is determined by an overtone mixed into a fundamental tone. The overtone is also called a higher harmonics component. Different higher harmonics have different amplitudes and phase shifts, which produce various timbre effects. Therefore, the first timbre parameter of the sound waves can be determined by analyzing the amplitude and the phase deviation of the sound waves.

S203, the first wireless earphone determines that the microphone of the first wireless earphone is blocked according to the first timbre parameter.

The first wireless earphone can determine that the microphone of the first wireless earphone is blocked according to the first timbre parameter in various ways. For example, the first timbre parameter can be compared with a preset timbre parameter, and when the first timbre parameter matches the preset timbre parameter, the microphone is determined to be blocked. The preset timbre parameter may be an empirical value, which is preset in the first wireless earphone by technical developers. For another example, the first timbre parameter can be compared with a preset timbre parameter, and when the first timbre parameter fails to match the preset timbre parameter, the microphone is determined to be blocked. The preset timbre parameter may be a timbre parameter of the user determined by the first wireless earphone based on a historical voice acquisition record. Implementation manners for the first wireless earphone to determine that the microphone of the first wireless earphone is blocked according to the first timbre parameter are not limited here.

The first wireless earphone can also determine that the microphone of the first wireless earphone is in a blocked state according to the first timbre parameter as followings. The first timbre parameter is compared with a second timbre parameter of sound waves acquired through the second wireless earphone. In other words, the first wireless earphone and the second wireless earphone acquire the sound waves in the preset frequency band at the same time, the second wireless earphone is known to be not blocked, and the first timbre parameter of the sound waves acquired by the first wireless earphone is compared with the second timbre parameter of the sound waves acquired by the second wireless earphone. If the first timbre parameter acquired by the first wireless earphone does not match the second timbre parameter acquired by the second wireless earphone, the first wireless earphone is determined to be blocked. For another example, the terminal is known to be not blocked, and the first wireless earphone is determined to be blocked by comparing timbre parameters acquired by the first wireless earphone and the mobile terminal, which is not limited here.

It can be seen that, in this implementation of the present disclosure, the first wireless earphone first acquires, through the microphone of the first wireless earphone, the sound waves in the preset frequency band, where the preset frequency band is the frequency band of audible sound. The first wireless earphone then determines the first timbre parameter of the sound waves acquired through the first wireless earphone. Finally, the first wireless earphone determines that the microphone of the first wireless earphone is blocked according to the first timbre parameter. So the first wireless earphone acquires through the microphone the sound waves in the frequency band of audible sound, and can determine that the microphone of the first wireless earphone is blocked according to timbre of the sound waves, which is beneficial to improve convenience of blocking detection. Moreover, due to universality of audible sound, detecting blocking by obtaining the audible sound is beneficial to improve time flexibility of blocking detection. In addition, the entire detecting process is performed by the wireless earphone autonomously, which realizes automatic blocking detection of the microphone of the wireless earphone microphone. In the meantime, blocking of the microphone can be detected without increasing a hardware structure, which expands functions of the wireless earphone and improves intelligence of blocking detection.

As an implementation, the microphone of the first wireless earphone can be determined to be blocked according to the first timbre parameter as follows. The first timbre parameter is compared with the preset timbre parameter. When the first timbre parameter does not match the preset timbre parameter, the microphone of the first wireless earphone is determined to be blocked.

That the first timbre parameter does not match the preset timbre parameter may be that a matching degree between the first timbre parameter and the preset timbre parameter is less than a preset matching degree threshold, for example, the matching degree may be less than 50%, etc., which is not limited herein.

The preset timbre parameter may be preset in the first wireless earphone when the user uses the first wireless earphone, or may be a timbre parameter of the user acquired by the first wireless earphone according to a history record. The preset timbre parameter may be a fixed value or a dynamic value. The dynamic value can have different parameter values according to different situations of the user. For example, the preset timbre parameter corresponding to the user with a cold is different from the preset timbre parameter corresponding to the user in a normal state; the preset timbre parameter corresponding to the use with a mask is different from the preset timbre parameter of the user without the mask; the preset timbre parameter corresponding to the user who is eating is different from the preset timbre parameter corresponding to the user who is not eating, etc., which is not limited herein.

It can be seen that, in this implementation, the first wireless earphone compares the first timbre parameter with the preset timbre parameter, and when the first timbre parameter does not match the preset timbre parameter, the microphone of the first wireless earphone is determined to be blocked, which is in line with a user's timbre state and is beneficial to improve accuracy of blocking detection.

As an implementation, the method further includes the following before the first timbre parameter is compared with the preset timbre parameter. Face image data is acquired through the mobile terminal. Existence of an obstruction at or around a lip is determined according to the face image data. The preset timbre parameter corresponding to the obstruction is determined when there is the obstruction.

The existence of the obstruction at or around a lip can be determined according to the face image data in various ways. For example, a lip image cannot be recognized in the face image data, that is, there is no lip image in the face image data, and it is determined that there is the obstruction; for another example, a preset lip image is compared with an image of an area where the mouth is located in a face image, when the preset lip image fails to match the image of the area, it is determined that there is the obstruction, which is not limited here.

Different obstructions correspond to different preset timbre parameters. For example, an obstruction of a mask corresponds to a first preset timbre parameter, and an obstruction of a neckline corresponds to a second preset timbre parameter. Since a distance between the mask and the mouth is smaller than a distance between the neckline and the mouth, effects of obstructions on timbre are different, and the first preset timbre parameter is different from the second preset timbre parameter. The first wireless earphone can judge whether the obstruction in the face image data is a mask or a neckline based on a preset mask image and a preset neckline image, which is not limited here.

It can be seen that, in this implementation, the first wireless earphone determines there is the obstruction at or around the lip according to the face image data and determines the preset timbre parameter according to the obstruction, which conforms to external factors that affect the timbre parameter and is beneficial to further improve accuracy of blocking detection.

As an implementation, the method further includes the following. A microphone of the second wireless earphone is controlled to acquire the sound waves in the preset frequency band. A second timbre parameter of sound waves acquired through the second wireless earphone is determined. The microphone of the first wireless earphone is determined to be blocked according to the first timbre parameter as follows. The first timbre parameter is compared with the second timbre parameter. The microphone of the first wireless earphone is determined to be blocked when the first timbre parameter does not match the second timbre parameter.

The second wireless earphone is in a non-blocking state, the first earphone can control the microphone of the second wireless earphone to acquire the sound waves in the preset frequency band by sending a notification message to the second wireless earphone so that the second wireless earphone acquires the sound waves according to the notification message and sends the sound waves to the first wireless earphone.

It can be seen that, in this implementation, the first wireless earphone controls the second wireless earphone to acquire the sound waves together with the first wireless earphone, and then determines whether the microphone is blocked by judging the first timbre parameter acquired by the first wireless earphone and the second timbre parameter acquired by the second wireless earphone. The two wireless earphones are in the same environment, which is beneficial to avoid environmental interference and further improve accuracy of blocking detection.

As an implementation, the method further includes the following before the sound waves in the preset frequency band are acquired through the microphone of the first wireless earphone. A first distance between the first wireless earphone and the mobile terminal and a second distance between the first wireless earphone and the second wireless earphone are acquired. When the first distance is greater than the second distance, a speaker of the second wireless earphone is controlled to emit the sound waves in the preset frequency band.

The second wireless earphone is not worn, and the first distance and the second distance can be determined in various ways. For example, the user may wear the first wireless earphone, and the first distance and the second distance can be determined by determining a distance between the user and the mobile terminal and a distance between the user and second wireless earphone. For another example, a signaling transmission time length can be determined through signaling interaction between the first wireless earphone and any one of the mobile terminal and the second wireless earphone, and the first distance parameter and the second distance parameter are determined according to the signaling transmission time length and a transmission speed, which are not limited here.

It can be seen that, in this implementation, the first wireless earphone controls one of the mobile terminal and the second wireless earphone to emit sound waves, where the one is closer to the first wireless earphone, which is beneficial to avoid serious attenuation of sound waves received by the first wireless earphone caused by a long distance and to improve accuracy of blocking detection. In addition, a speaker of one of the mobile terminal and the second wireless earphone is controlled to emit the sound waves instead of a speaker of the first wireless earphone, which can help avoid a situation that blocking cannot be detected when the first wireless earphone is worn and can improve convenience of blocking detection.

As an implementation, the method further includes the following after the microphone of the first wireless earphone is determined to be blocked according to the first timbre parameter. Whether the second wireless earphone is worn is determined in response to an acquisition instruction for voice data and the first wireless earphone being worn. When the second wireless earphone is worn, the microphone of the first wireless earphone is disabled and a microphone of the second wireless earphone is controlled to acquire voice data.

The acquisition instruction for voice data can be detected in various ways, for example, the acquisition instruction for voice data is detected by receiving an acquisition instruction for voice data sent by the mobile terminal. The acquisition instruction for voice data may be triggered by a user's long press operation on a designated button in a touch screen when a chat application (e.g., WeChat, QQ, etc.) is running in the foreground; for another example, the acquisition instruction for voice data is detected through the first wireless earphone by detecting the user's operation such as touch or press, which is not limited here. The acquisition instruction indicates that the user needs to record voice data.

The first wireless earphone can determine whether the second wireless earphone is worn through multiple proximity sensors or pressure sensors by detecting contact between the second wireless earphone and an auricle, or determine whether the second wireless earphone is worn according to a gesture parameter of the second wireless earphone, or determine whether the second wireless earphone is worn by detecting a communication identifier which is indicative of successful communication between the second wireless earphone and the mobile terminal, or determine whether the second wireless earphone is worn by detecting a music playback message, which are not limited here.

It can be seen that, in this implementation, after the first wireless earphone is determined to be blocked, whether the second wireless earphone is worn is determined in response to the acquisition instruction for voice data. When the second wireless earphone is worn, the second wireless earphone is switched to acquire voice data and a voice acquisition function of the first wireless earphone is disabled at the same time, which is beneficial to improve integrity of acquisition for voice data and reduce power consumption of the first wireless earphone.

As an implementation, the method further includes the following after whether the second wireless earphone is worn is determined. When the second wireless earphone is not worn, a third distance between the first wireless earphone and the mobile terminal and a fourth distance between the first wireless earphone and the second wireless earphone are determined. When the third distance is less than the fourth distance, a notification message is sent to the mobile terminal to notify the mobile terminal to acquire voice data through a microphone of the mobile terminal.

It can be seen that, in this implementation, after the first wireless earphone is determined to be blocked, when the acquisition instruction for voice data is detected and the second wireless earphone is determined to be not worn, the mobile terminal that is closer to the first wireless earphone is determined and is notified to obtain voice data, which is beneficial to ensure clarity of acquisition for voice data.

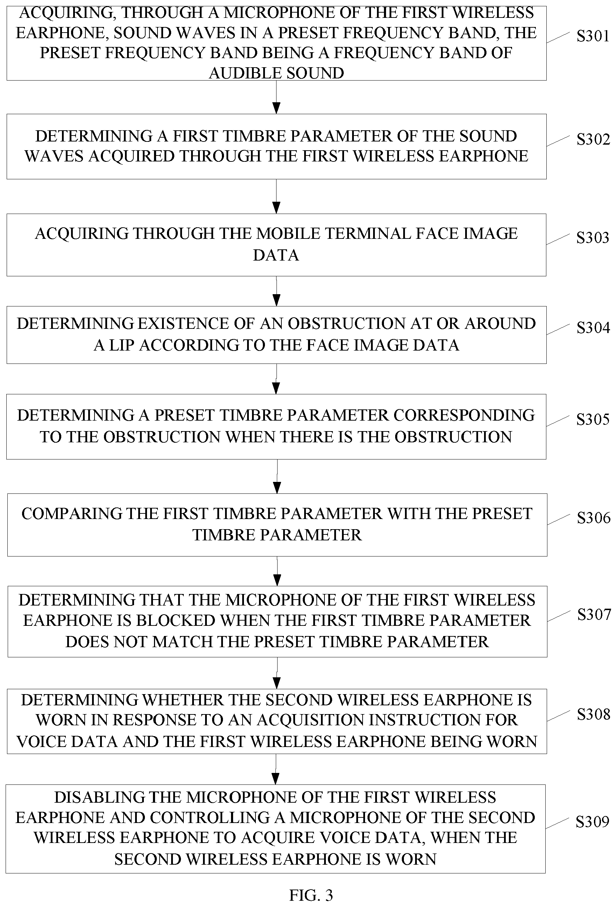

Similar to implementations illustrated in FIG. 2, FIG. 3 is a schematic flowchart of a method for detecting blocking of a microphone according to implementations. As illustrated in FIG. 3, the method for detecting blocking of a microphone includes the following.
S301, a first wireless earphone acquires, through a microphone of the first wireless earphone, sound waves in a preset frequency band, where the preset frequency band is a frequency band of audible sound.
S302, the first wireless earphone determines a first timbre parameter of the sound waves acquired through the first wireless earphone.
S303, the first wireless earphone acquires through a mobile terminal face image data.
S304, the first wireless earphone determines existence of an obstruction at or around a lip according to the face image data.
S305, the first wireless earphone determines a preset timbre parameter corresponding to the obstruction when there is the obstruction.
S306, the first wireless earphone compares the first timbre parameter with the preset timbre parameter.
S307, the first wireless earphone determines that the microphone of the first wireless earphone is blocked when the first timbre parameter does not match the preset timbre parameter.
S308, the first wireless earphone determines whether the second wireless earphone is worn in response to an acquisition instruction for voice data and the first wireless earphone being worn.
S309, when the second wireless earphone is worn, the first wireless earphone disables the microphone of the first wireless earphone and controls a microphone of the second wireless earphone to acquire voice data.

It can be seen that, in this implementation of the present disclosure, the first wireless earphone first acquires, through the microphone of the first wireless earphone, the sound waves in the preset frequency band, where the preset frequency band is the frequency band of audible sound. The first wireless earphone then determines the first timbre parameter of the sound waves acquired through the first wireless earphone. Finally, the first wireless earphone determines that the microphone of the first wireless earphone is blocked according to the first timbre parameter. So the first wireless earphone acquires through the microphone the sound waves in the frequency band of audible sound, and can determine that the microphone of the first wireless earphone is blocked according to timbre of the sound waves, which is beneficial to improve convenience of blocking detection. Moreover, due to universality of audible sound, detecting blocking by obtaining the audible sound is beneficial to improve time flexibility of blocking detection. In addition, the entire detecting process is performed by the wireless earphone autonomously, which realizes automatic blocking detection of the wireless earphone microphone. In the meantime, blocking of the microphone can be detected without increasing a hardware structure, which expands functions of the wireless earphone and improves intelligence of blocking detection.

In addition, the first wireless earphone compares the first timbre parameter with the preset timbre parameter, and when the first timbre parameter does not match the preset timbre parameter, the microphone of the first wireless earphone is determined to be blocked, which is in line with a user's timbre state and is beneficial to improve accuracy of blocking detection. Moreover, the first wireless earphone determines there is the obstruction at or around the lip according to the face image data and determines the preset timbre parameter according to the obstruction, which conforms to external factors that affect the timbre parameter and is beneficial to further improve accuracy of blocking detection.

In addition, after the first wireless earphone is determined to be blocked, whether the second wireless earphone is worn is determined in response to the acquisition instruction for voice data. When the second wireless earphone is worn, the second wireless earphone is switched to acquire voice data and a voice acquisition function of the first wireless earphone is disabled at the same time, which is beneficial to improve integrity of acquisition for voice data and reduce power consumption of the first wireless earphone.

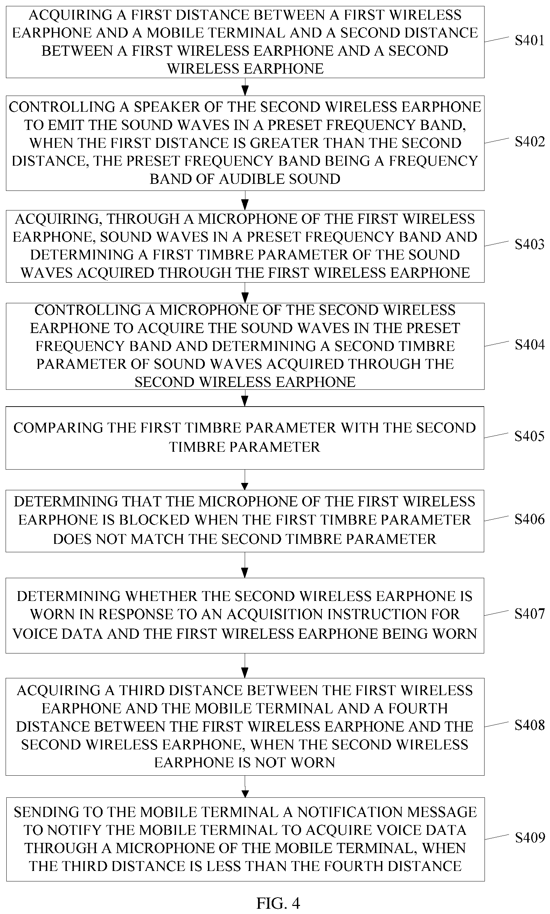

Similar to implementations illustrated in FIG. 2, FIG. 4 is a schematic flowchart of a method for detecting blocking of a microphone according to implementations. As illustrated in FIG. 4, the method for detecting blocking of a microphone includes the following.
S401, a first wireless earphone acquires a first distance between the first wireless earphone and a mobile terminal and a second distance between the first wireless earphone and a second wireless earphone.
S402, the first wireless earphone controls a speaker of the second wireless earphone to emit sound waves in a preset frequency band, when the first distance is greater than the second distance, where the preset frequency band is a frequency band of audible sound.
S403, the first wireless earphone acquires, through a microphone of the first wireless earphone, the sound waves in the preset frequency band and determines a first timbre parameter of the sound waves acquired through the first wireless earphone.
S404, the first wireless earphone controls a microphone of the second wireless earphone to acquire the sound waves in the preset frequency band and determines a second timbre parameter of sound waves acquired through the second wireless earphone.
S405, the first wireless earphone compares the first timbre parameter with the second timbre parameter.
S406, the first wireless earphone determines that the microphone of the first wireless earphone is blocked when the first timbre parameter does not match the second timbre parameter.
S407, the first wireless earphone determines whether the second wireless earphone is worn in response to an acquisition instruction for voice data and the first wireless earphone being worn.
S408, when the second wireless earphone is not worn, the first wireless earphone acquires a third distance between the first wireless earphone and the mobile terminal and a fourth distance between the first wireless earphone and the second wireless earphone.
S409, when the third distance is less than the fourth distance, the first wireless earphone sends to the mobile terminal a notification message to notify the mobile terminal to acquire voice data through a microphone of the mobile terminal.

It can be seen that, in this implementation of the present disclosure, the first wireless earphone first acquires, through the microphone of the first wireless earphone, the sound waves in the preset frequency band, where the preset frequency band is the frequency band of audible sound. The first wireless earphone then determines the first timbre parameter of the sound waves acquired through the first wireless earphone. Finally, the first wireless earphone determines that the microphone of the first wireless earphone is blocked according to the first timbre parameter. So the first wireless earphone acquires through the microphone the sound waves in the frequency band of audible sound, and can determine that the microphone of the first wireless earphone is blocked according to timbre of the sound waves, which is beneficial to improve convenience of blocking detection. Moreover, due to universality of audible sound, detecting blocking by obtaining the audible sound is beneficial to improve time flexibility of blocking detection. In addition, the entire detecting process is performed by the wireless earphone autonomously, which realizes automatic blocking detection of the wireless earphone microphone. In the meantime, blocking of the microphone can be detected without increasing a hardware structure, which expands functions of the wireless earphone and improves intelligence of blocking detection.

In addition, the first wireless earphone controls the second wireless earphone to acquire the sound waves together with the first wireless earphone, and then determines whether the microphone is blocked by judging the first timbre parameter acquired by the first wireless earphone and the second timbre parameter acquired by the second wireless earphone. The two wireless earphones are in the same environment, which is beneficial to avoid environmental interference and further improve accuracy of blocking detection.

In addition, the first wireless earphone controls one of the mobile terminal and the second wireless earphone to emit sound waves, where the one is closer to the first wireless earphone, which is beneficial to avoid serious attenuation of sound waves received by the first wireless earphone caused by a long distance and to improve accuracy of blocking detection. In addition, a speaker of one of the mobile terminal and the second wireless earphone is controlled to emit the sound waves instead of a speaker of the first wireless earphone, which can help avoid a situation that blocking cannot be detected when the first wireless earphone is worn and can improve convenience of blocking detection.

In addition, after the first wireless earphone is determined to be blocked, when the acquisition instruction for voice data is detected and the second wireless earphone is determined to be not worn, the mobile terminal that is closer to the first wireless earphone is determined and is notified to obtain voice data, which is beneficial to ensure clarity of acquisition for voice data.

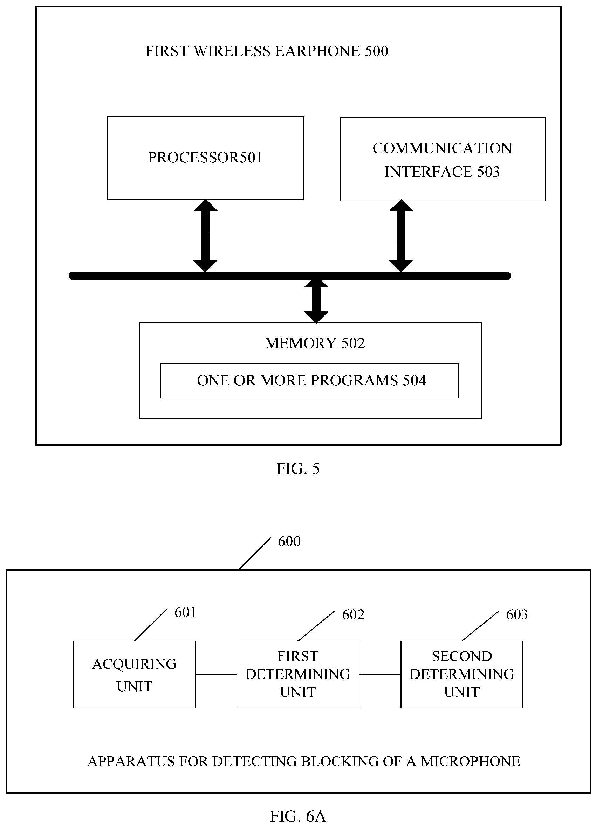

Similar to implementations illustrated in FIG. 2, FIG. 3, and FIG. 4, FIG. 5 is a schematic structural diagram of a first wireless earphone 500 according to implementations. As illustrated in FIG. 5, the first wireless earphone 500 includes a processor 501, a memory 502, a communication interface 503, and one or more programs 504 stored in the memory 502 and executed by the processor 501. The one or more programs 504 include instructions for performing the following operations.

Sound waves in a preset frequency band are acquired through a microphone of the first wireless earphone, where the preset frequency band is a frequency band of audible sound. A first timbre parameter of the sound waves acquired through the first wireless earphone is determined. The microphone of the first wireless earphone is determined to be blocked according to the first timbre parameter.

It can be seen that, in this implementation of the present disclosure, the first wireless earphone first acquires, through the microphone of the first wireless earphone, the sound waves in the preset frequency band, where the preset frequency band is the frequency band of audible sound. The first wireless earphone then determines the first timbre parameter of the sound waves acquired through the first wireless earphone. Finally, the first wireless earphone determines that the microphone of the first wireless earphone is blocked according to the first timbre parameter. So the first wireless earphone acquires through the microphone the sound waves in the frequency band of audible sound, and can determine that the microphone of the first wireless earphone is blocked according to timbre of the sound waves, which is beneficial to improve convenience of blocking detection. Moreover, due to universality of audible sound, detecting blocking by obtaining the audible sound is beneficial to improve time flexibility of blocking detection. In addition, the entire detecting process is performed by the wireless earphone autonomously, which realizes automatic blocking detection of the wireless earphone microphone. In the meantime, blocking of the microphone can be detected without increasing a hardware structure, which expands functions of the wireless earphone and improves intelligence of blocking detection.

As an implementation, in terms of determining that the microphone of the first wireless earphone is blocked according to the first timbre parameter, the one or more programs 504 include instructions for performing the following operations. The first timbre parameter is compared with the preset timbre parameter. When the first timbre parameter does not match the preset timbre parameter, the microphone of the first wireless earphone is determined to be blocked.

As an implementation, the one or more programs 504 further include instructions for performing the following operations. Before the first timbre parameter is compared with the preset timbre parameter, face image data is acquired through the mobile terminal. Existence of an obstruction at or around a lip is determined according to the face image data. The preset timbre parameter corresponding to the obstruction is determined when there is the obstruction.

As an implementation, the one or more programs 504 further include instructions for performing the following operations. A microphone of the second wireless earphone is controlled to acquire the sound waves in the preset frequency band. A second timbre parameter of sound waves acquired through the second wireless earphone is determined. In terms of determining that the microphone of the first wireless earphone is blocked according to the first timbre parameter, the one or more programs 504 include instructions for performing the following operations. The first timbre parameter is compared with the second timbre parameter. The microphone of the first wireless earphone is determined to be blocked when the first timbre parameter does not match the second timbre parameter.

As an implementation, the one or more programs 504 further include instructions for performing the following operations. Before the sound waves in the preset frequency band are acquired through the microphone of the first wireless earphone, a first distance between the first wireless earphone and the mobile terminal and a second distance between the first wireless earphone and the second wireless earphone are acquired. When the first distance is greater than the second distance, a speaker of the second wireless earphone is controlled to emit the sound waves in the preset frequency band.

As an implementation, the one or more programs 504 further include instructions for performing the following operations. After the microphone of the first wireless earphone is determined to be blocked according to the first timbre parameter, whether the second wireless earphone is worn is determined in response to an acquisition instruction for voice data and the first wireless earphone being worn. When the second wireless earphone is worn, the microphone of the first wireless earphone is disabled and a microphone of the second wireless earphone is controlled to acquire voice data.

As an implementation, the one or more programs 504 further include instructions for performing the following operations. After whether the second wireless earphone is worn is determined, a third distance between the first wireless earphone and the mobile terminal and a fourth distance between the first wireless earphone and the second wireless earphone are determined when the second wireless earphone is not worn. When the third distance is less than the fourth distance, a notification message is sent to the mobile terminal to notify the mobile terminal to acquire voice data through a microphone of the mobile terminal.

The foregoing solution of the implementations of the present disclosure is mainly described from the viewpoint of execution process of the method. It can be understood that, in order to implement the above functions, the electronic device includes hardware structures and/or software modules corresponding to the respective functions. Those skilled in the art should readily recognize that, in combination with the example units and scheme steps described in the implementations disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementations should not be considered as beyond the scope of the present disclosure.

According to the implementations of the present disclosure, functional units may be divided for the first wireless earphone in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations is schematic, and is merely a logical function division, and there may be other division manners in actual implementation.

FIG. 6A is a block diagram illustrating functional units of an apparatus 600 for detecting blocking of a microphone according to implementations. The apparatus 600 for detecting blocking of a microphone is applicable to a first wireless earphone that is in communication with a mobile terminal and a second wireless earphone. The apparatus 600 for detecting blocking of a microphone includes an acquiring unit 601, a first determining unit 602, and a second determining unit 603.

The acquiring unit 601 is configured to acquire, through a microphone of the first wireless earphone, sound waves in a preset frequency band, where the preset frequency band is a frequency band of audible sound.

The first determining unit 602 is configured to determine a first timbre parameter of the sound waves acquired through the first wireless earphone.

The second determining unit 603 is configured to determine that the microphone of the first wireless earphone is blocked according to the first timbre parameter.

It can be seen that, in this implementation of the present disclosure, the first wireless earphone first acquires, through the microphone of the first wireless earphone, the sound waves in the preset frequency band, where the preset frequency band is the frequency band of audible sound. The first wireless earphone then determines the first timbre parameter of the sound waves acquired through the first wireless earphone. Finally, the first wireless earphone determines that the microphone of the first wireless earphone is blocked according to the first timbre parameter. So the first wireless earphone acquires through the microphone the sound waves in the frequency band of audible sound, and can determine that the microphone of the first wireless earphone is blocked according to timbre of the sound waves, which is beneficial to improve convenience of blocking detection. Moreover, due to universality of audible sound, detecting blocking by obtaining the audible sound is beneficial to improve time flexibility of blocking detection. In addition, the entire detecting process is performed by the wireless earphone autonomously, which realizes automatic blocking detection of the wireless earphone microphone. In the meantime, blocking of the microphone can be detected without increasing a hardware structure, which expands functions of the wireless earphone and improves intelligence of blocking detection.

As an implementation, in terms of determining that the microphone of the first wireless earphone is blocked according to the first timbre parameter, the second determining unit 603 is configured to: compare the first timbre parameter with a preset timbre parameter; determine that the microphone of the first wireless earphone is blocked when the first timbre parameter does not match the preset timbre parameter.

As an implementation, the second determining unit 603 is configured to: before comparing the first timbre parameter with the preset timbre parameter, acquire through the mobile terminal face image data; determine existence of an obstruction at or around a lip according to the face image data; determine the preset timbre parameter corresponding to the obstruction when there is the obstruction.

As an implementation, the acquiring unit 601 is further configured to control a microphone of the second wireless earphone to acquire the sound waves in the preset frequency band. The first determining unit 602 is further configured to determine a second timbre parameter of sound waves acquired through the second wireless earphone. The second determining unit 603, in terms of determining that the microphone of the first wireless earphone is blocked according to the first timbre parameter, is configured to: compare the first timbre parameter with the second timbre parameter; determine that the microphone of the first wireless earphone is blocked when the first timbre parameter does not match the second timbre parameter.

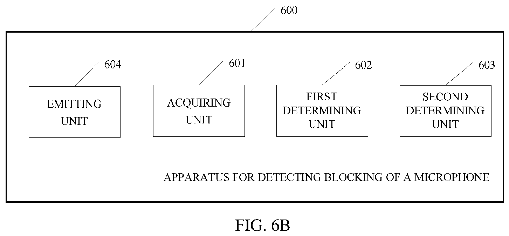

As an implementation, as illustrated in FIG. 6B, the apparatus further includes an emitting unit 604. The acquiring unit 601 is further configured to acquire a first distance between the first wireless earphone and the mobile terminal and a second distance between the first wireless earphone and the second wireless earphone before acquiring, through the microphone of the first wireless earphone, the sound waves in the preset frequency band. The emitting unit 604 is configured to control a speaker of the second wireless earphone to emit the sound waves in the preset frequency band, when the first distance is greater than the second distance.

As an implementation, the second determining unit 603 is further configured to determine whether the second wireless earphone is worn in response to an acquisition instruction for voice data and the first wireless earphone being worn after determining that the microphone of the first wireless earphone is blocked according to the first timbre parameter. The acquiring unit 601 is further configured to disable the microphone of the first wireless earphone and control a microphone of the second wireless earphone to acquire voice data, when the second wireless earphone is worn.

As an implementation, the acquiring unit 601 is configured to: after determining whether the second wireless earphone is worn, acquire a third distance between the first wireless earphone and the mobile terminal and a fourth distance between the first wireless earphone and the second wireless earphone, when the second wireless earphone is not worn; send to the mobile terminal a notification message to notify the mobile terminal to acquire voice data through a microphone of the mobile terminal, when the third distance is less than the fourth distance.

The acquiring unit 601 may be a microphone or a processor, the first determining unit 602 and the second determining unit 603 may be a processor or a transceiver, and the emitting unit 604 may be a speaker.

Implementations further provide a computer storage medium. The computer storage medium is configured to store computer programs for electronic data interchange (EDI) which, when executed, are operable with a computer to perform some or all operations of any one of the foregoing method implementations.

Implementations further provide a computer program product. The computer program product includes a non-transitory computer-readable storage medium that stores computer programs. The computer programs are operable with a computer to execute some or all operations of any one of the foregoing method implementations.

It is to be noted that, for the sake of simplicity, the foregoing method implementations are described as a series of action combinations, however, it will be appreciated by those skilled in the art that the present disclosure is not limited by the sequence of actions described. According to implementations, certain steps or operations may be performed in other order or simultaneously. Besides, it will be appreciated by those skilled in the art that the implementations described in the specification are exemplary implementations and the actions and modules involved are not necessarily essential to the present disclosure.

In the above implementations, description of each implementation has its own emphasis. For details not described in one implementation, reference can be made to related part in other implementations.

It will be appreciated that the apparatuses disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in implementations herein may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, e.g., a personal computer, a server, a network device, etc, to execute some or all operations of the methods described in various implementations. The above storage medium may include various kinds of media that can store program codes, such as a universal serial bus (USB) flash disk, a read only memory (ROM), a random access memory (RAM), a mobile hard drive, a magnetic disk, or an optical disk.

It will be understood by those of ordinary skill in the art that all or part of the various methods of the implementations described above may be accomplished by means of a program to instruct associated hardware. The program may be stored in a computer-readable memory, which may include a flash memory, a ROM, a RAM, a magnetic disk, an optical disk, and so on.

While the disclosure has been described in connection with certain implementations, it is to be understood that the disclosure is not to be limited to the disclosed implementations but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for detecting blocking of a microphone, applicable to a first wireless earphone that is in communication with a mobile terminal and a second wireless earphone, and the method comprising:
acquiring, through a microphone of the first wireless earphone, sound waves in a preset frequency band, the preset frequency band being a frequency band of audible sound;
determining a first timbre parameter of the sound waves acquired through the first wireless earphone; and
determining that the microphone of the first wireless earphone is blocked according to the first timbre parameter.

2. The method of claim 1, wherein determining that the microphone of the first wireless earphone is blocked according to the first timbre parameter comprises:
comparing the first timbre parameter with a preset timbre parameter; and
determining that the microphone of the first wireless earphone is blocked when the first timbre parameter does not match the preset timbre parameter.

3. The method of claim 2, further comprising:
before comparing the first timbre parameter with the preset timbre parameter,
acquiring through the mobile terminal face image data;
determining existence of an obstruction at or around a lip according to the face image data; and
determining the preset timbre parameter corresponding to the obstruction when there is the obstruction.

4. The method of claim 2, further comprising:
before comparing the first timbre parameter with the preset timbre parameter,
acquiring a physical state of a user; and
determining the preset timbre parameter corresponding to a sick state when the physical state is the sick state.

5. The method of claim 1, further comprising:
controlling a microphone of the second wireless earphone to acquire the sound waves in the preset frequency band; and
determining a second timbre parameter of sound waves acquired through the second wireless earphone, wherein
determining that the microphone of the first wireless earphone is blocked according to the first timbre parameter comprises:
comparing the first timbre parameter with the second timbre parameter; and
determining that the microphone of the first wireless earphone is blocked when the first timbre parameter does not match the second timbre parameter.

6. The method of any of claims 1 to 5, further comprising:
before acquiring, through the microphone of the first wireless earphone, the sound waves in the preset frequency band,
acquiring a first distance between the first wireless earphone and the mobile terminal and a second distance between the first wireless earphone and the second wireless earphone; and
controlling a speaker of the second wireless earphone to emit the sound waves in the preset frequency band, when the first distance is greater than the second distance.

7. The method of any of claims 1 to 6, further comprising:
after determining that the microphone of the first wireless earphone is blocked according to the first timbre parameter,
determining whether the second wireless earphone is worn in response to an acquisition instruction for voice data and the first wireless earphone being worn; and
disabling the microphone of the first wireless earphone and controlling a microphone of the second wireless earphone to acquire voice data, when the second wireless earphone is worn.

8. The method of claim 7, wherein determining whether the second wireless earphone is worn comprises:
determining a gesture parameter of the second wireless earphone; and
determining whether the second wireless earphone is worn according to the gesture parameter of the second wireless earphone.

9. The method of claim 7, further comprising:
after determining whether the second wireless earphone is worn,
acquiring a third distance between the first wireless earphone and the mobile terminal and a fourth distance between the first wireless earphone and the second wireless earphone, when the second wireless earphone is not worn; and
sending to the mobile terminal a notification message to notify the mobile terminal to acquire voice data through a microphone of the mobile terminal, when the third distance is less than the fourth distance.

10. An apparatus for detecting blocking of a microphone, applicable to a first wireless earphone that is in communication with a mobile terminal and a second wireless earphone, and the apparatus comprising:
an acquiring unit configured to acquire, through a microphone of the first wireless earphone, sound waves in a preset frequency band, the preset frequency band being a frequency band of audible sound;
a first determining unit configured to determine a first timbre parameter of the sound waves acquired through the first wireless earphone; and
a second determining unit configured to determine that the microphone of the first wireless earphone is blocked according to the first timbre parameter.

11. The apparatus of claim 10, wherein in terms of determining that the microphone of the first wireless earphone is blocked according to the first timbre parameter, the second determining unit is configured to: compare the first timbre parameter with a preset timbre parameter; and determine that the microphone of the first wireless earphone is blocked when the first timbre parameter does not match the preset timbre parameter.

12. The apparatus of claim 11, wherein the second determining unit is configured to:
before comparing the first timbre parameter with the preset timbre parameter,
acquire through the mobile terminal face image data;
determine existence of an obstruction at or around a lip according to the face image data; and
determine the preset timbre parameter corresponding to the obstruction when there is the obstruction.

13. The apparatus of claim 11, wherein the second determining unit is configured to:
before comparing the first timbre parameter with the preset timbre parameter,
acquire a physical state of a user; and
determine the preset timbre parameter corresponding to a sick state when the physical state is the sick state.

14. The apparatus of claim 10, wherein
the acquiring unit is further configured to control a microphone of the second wireless earphone to acquire the sound waves in the preset frequency band;
the first determining unit is further configured to determine a second timbre parameter of sound waves acquired through the second wireless earphone; and
the second determining unit, in terms of determining that the microphone of the first wireless earphone is blocked according to the first timbre parameter, is configured to:
compare the first timbre parameter with the second timbre parameter; and
determine that the microphone of the first wireless earphone is blocked when the first timbre parameter does not match the second timbre parameter.

15. The apparatus of any of claims 10 to 14, wherein
the acquiring unit is further configured to acquire a first distance between the first wireless earphone and the mobile terminal and a second distance between the first wireless earphone and the second wireless earphone before acquiring, through the microphone of the first wireless earphone, the sound waves in the preset frequency band; and
the apparatus further comprises:
an emitting unit configured to control a speaker of the second wireless earphone to emit the sound waves in the preset frequency band, when the first distance is greater than the second distance.

16. The apparatus of any of claims 10 to 15, wherein
the second determining unit is further configured to determine whether the second wireless earphone is worn in response to an acquisition instruction for voice data and the first wireless earphone being worn after determining that the microphone of the first wireless earphone is blocked according to the first timbre parameter,
the acquiring unit is further configured to disable the microphone of the first wireless earphone and control a microphone of the second wireless earphone to acquire voice data, when the second wireless earphone is worn.

17. The apparatus of claim 16, wherein the second determining unit, in terms of determining whether the second wireless earphone is worn, is configured to:
determine a gesture parameter of the second wireless earphone; and
determine whether the second wireless earphone is worn according to the gesture parameter of the second wireless earphone.

18. The apparatus of claim 17, the acquiring unit is configured to:
after determining whether the second wireless earphone is worn,
acquire a third distance between the first wireless earphone and the mobile terminal and a fourth distance between the first wireless earphone and the second wireless earphone, when the second wireless earphone is not worn; and
send to the mobile terminal a notification message to notify the mobile terminal to acquire voice data through a microphone of the mobile terminal, when the third distance is less than the fourth distance.

19. A first microphone comprising a processor, a memory, and one or more programs stored in the memory and executed by the processor, wherein the one or more programs comprise instructions for performing the method of any of claims 1 to 9.

20. A computer-readable storage medium configured to store computer programs for electronic data interchange (EDI) which, when executed, are operable with a computer to perform the method of any of claims 1 to 9.
